# EUROPEAN PATENT APPLICATION

(11) **EP 3 309 375 A1**
(43) Date of publication of application: **18.04.2018**
(21) Application number: 16811167.2
(22) Date of filing: 15.04.2016
(51) Int. Cl.: F02D 29/02, B62M 7/02, F01L 13/00, F02D 13/02, F02D 17/00, F02D 41/04, F02N 11/08

(54) **ENGINE SYSTEM AND SADDLE RIDE-TYPE VEHICLE**

(30) Priority: 15.06.2015 JP 2015120577
(71) Applicant: Yamaha Hatsudoki Kabushiki Kaisha, Iwata-shi, Shizuoka 438-8501 (JP)
(72) Inventor: MASUDA, Takahiro, Iwata-shi Shizuoka 438-8501 (JP); KAKU, Junichi, Iwata-shi Shizuoka 438-8501 (JP); YAMAGUCHI, Yuki, Iwata-shi Shizuoka 438-8501 (JP); TAKAHASHI, Seigo, Iwata-shi Shizuoka 438-8501 (JP)
(74) Representative: Zimmermann, Tankred Klaus
(86) International application number: PCT/JP2016/002055
(87) International publication number: WO 2016/203686

(57) **Abstract**

During start-up of an engine, a crankshaft is rotated in reverse such that a crank angle reaches a start-up ignition range across a start-up intake range. At least part of the start-up intake range is in a normal compression range, and the start-up ignition range is in a normal intake range. A fuel-air mixture is introduced into a combustion chamber when the crank angle is in the start-up intake range, and the fuel-air mixture in the combustion chamber is compressed when the crank angle is in the normal intake range. After that, when the crank angle is in the start-up ignition range, the fuel-air mixture in the combustion chamber is ignited and then combusted.

## Description

### [Technical Field]

The present invention relates to an engine system and a straddled vehicle.

### [Background Art]

In a straddled vehicle such as a motorcycle, at the time of a start-up operation of an engine, a larger torque is required for a crank angle to exceed an angle corresponding to a first compression top dead center. Therefore, there is a technique for rotating a crankshaft in a reverse direction in order to enhance startability of the engine.

In an engine system described in Patent Document 1, during start-up of an engine, a fuel-air mixture is introduced into a combustion chamber while a crankshaft is rotated in a reverse direction. With the fuel-air mixture in the combustion chamber being compressed by the rotation of the crankshaft in the reverse direction, the fuel-air mixture in the combustion chamber is ignited. The crankshaft is driven to rotate in a forward direction by the combustion energy of the fuel-air mixture, so that a forward torque of the crankshaft is increased.

Patent Document 1: JP 2014-77405 A

### [Summary of Invention]

### [Technical Problem]

In the above-described method, however, since the crank angle is required to exceed an angle corresponding to an exhaust top dead center (overlap top dead center) during the reverse rotation of the crankshaft, an engine start time and an engine starting energy are increased.

An object of the present invention is to provide an engine system and a straddled vehicle in which an engine can be started in a shorter time at lower energy.

### [Solution to Problem]

(1) According to one aspect of the present invention, an engine system includes an engine, a rotation driver that rotates a crankshaft of the engine in a forward direction and in a reverse direction, and a controller that controls the engine and the rotation driver, a range of a crank angle corresponding to an intake stroke during normal operation or a normal running is defined as a normal intake range, and the range of the crank angle corresponding to a compression stroke during the normal operation is defined as a normal compression range, the normal compression range includes at least part of a start-up intake range, and the normal intake range includes a start-up ignition range, the controller controls the rotation driver during start-up of the engine to perform a reverse rotation operation for rotating the crankshaft in the reverse direction such that the crank angle passes through the start-up intake range and reaches the start-up ignition range, and the controller controls the engine during the reverse rotation operation of the rotation driver such that a fuel-air mixture is introduced into a combustion chamber through an intake port when the crank angle is in the start-up intake range, the fuel-air mixture in the combustion chamber is compressed when the crank angle is in the normal intake range, and the fuel-air mixture in the combustion chamber is ignited when the crank angle is in the start-up ignition range.
   In this engine system, during the start-up of the engine, the crankshaft is rotated in reverse such that the crank angle reaches the start-up ignition range across the start-up intake range. At least part of the start-up intake range is in the normal compression range, and the start-up ignition range is in the normal intake range. The fuel-air mixture is introduced into the combustion chamber when the crank angle is in the start-up intake range, and the fuel-air mixture in the combustion chamber is compressed when the crank angle is in the normal intake range. After that, when the crank angle is in the start-up ignition range, the fuel-air mixture in the combustion chamber is ignited and then combusted. Thus, the crankshaft is driven in the forward direction, and a forward torque of the crankshaft is increased. In this case, since an angle range of the reverse rotation of the crankshaft is small, a time period for which the crankshaft is rotated in reverse is shortened. Thus, the engine can be started in a shorter time at lower energy.
(2) The normal compression range may include a reverse rotation starting range that is positioned at a further advanced angle than the start-up intake range in the reverse direction, and the controller may control the rotation driver such that the crank angle is adjusted to be in the reverse rotation starting range before the reverse rotation operation.
   In this case, even if there is a variation in crank angle of the stopped engine, the crank angle is adjusted to be in the reverse rotation starting range before the start-up of the engine. As such, during the reverse rotation of the crankshaft, the fuel-air mixture can appropriately be introduced into the combustion chamber, and the introduced fuel-air mixture can appropriately be compressed. Thus, the fuel-air mixture can appropriately be combusted.
(3) The normal compression range may include a start-up fuel injection range that is positioned at a further advanced angle than the start-up intake range in the reverse direction, and the controller may control the engine during the reverse rotation operation of the rotation driver such that fuel is injected into an intake passage when the crank angle is in the start-up fuel injection range. In this case, the fuel-air mixture can appropriately be introduced into the combustion chamber.
(4) The engine may include a valve driver that drives an intake valve and an exhaust valve, and a switch that switches an operation of the valve driver, the valve driver may include a normal intake cam that lifts the intake valve at least in the normal intake range, and a start-up intake cam that lifts the intake valve in the start-up intake range and does not lift the intake valve in a portion of the normal intake range excluding the start-up intake range, and the switch may switch the operation of the valve driver such that the normal intake cam drives the intake valve during the normal operation, and the start-up intake cam drives the intake valve during the reverse rotation operation of the rotation driver. In this case, the intake port can be opened at a time suitable for each of the normal operation and the reverse rotation operation without complication of the configuration.
(5) The switch may switch the operation of the valve driver between a state where the normal intake cam drives the intake valve and a state where the start-up intake cam drives the intake valve by moving the normal intake cam and the start-up intake cam. In this case, the operation of the valve driver can appropriately be switched in any relationship between a working angle of the normal intake cam and a working angle of the start-up intake cam.
(6) The normal intake cam may be provided to lift the intake valve in a normal lift range that includes the normal intake range and the start-up intake range, the valve driver may further include a first intake rocker arm that abuts against the normal intake cam, and a second intake rocker arm that is abuttable against the start-up intake cam and drives the intake valve, and the switch may switch the operation of the valve driver between a state where the first and second intake rocker arms swing independently of each other and a state where the first and second intake rocker arms swing integrally.
   In this case, with the first and second intake rocker arms swinging integrally, the normal intake cam causes the first and second intake rocker arms to swing integrally, whereby the intake valve can be lifted in the normal lift range. On the other hand, with the first and second intake rocker arms swinging independently of each other, the start-up intake cam causes the second intake rocker arm to swing separately from the first intake rocker arm, whereby the intake valve can be lifted in the start-up intake range. Thus, the operation of the valve driver can be switched with a simple configuration.
(7) The engine may discharge combusted gas from the combustion chamber through an exhaust port after the reverse rotation operation of the rotation driver and before the crank angle reaches an angle corresponding to a first compression top dead center. In this case, the combusted gas is inhibited from flowing out to the intake passage after the reverse rotation operation. Thus, the combusted gas remaining in the intake passage is prevented from interrupting a subsequent intake stroke.
(8) The engine does not have to open the intake port after the reverse rotation operation of the rotation driver and before the crank angle reaches the angle corresponding to the first compression top dead center. In this case, the combusted gas is discharged through the exhaust port without flowing out to the intake passage after the reverse rotation operation. Thus, the fuel-air mixture can appropriately be introduced into the combustion chamber in the subsequent intake stroke.
(9) The engine may open the intake port in the start-up intake range and open the exhaust port in part of the normal compression range during the reverse rotation operation of the rotation driver, and also after the reverse rotation operation of the rotation driver and before the crank angle reaches the angle corresponding to the first compression top dead center. In this case, the intake port and the exhaust port are each opened in a certain respective crank angle range both during and after the reverse rotation operation. Thus, it is possible to inhibit the combusted gas from flowing out to the intake passage while preventing the complication of the configuration.
(10) According to another aspect of the present invention, a straddled vehicle includes a main body having a drive wheel, and the above-described engine system that generates motive power for rotating the drive wheel. In this straddled vehicle, since the above-described engine system is used, the engine can be started in a shorter time at lower energy.

### [Advantageous Effects of Invention]

According to the present invention, the engine can be started in a shorter time at lower energy.

### [Brief Description of Drawings]

[FIG. 1] Fig. 1 is a schematic side view showing the general configuration of a motorcycle according to a first embodiment.
[FIG. 2] Fig. 2 is a schematic diagram for explaining the configuration of an engine system in the first embodiment.
[FIG. 3] Fig. 3 is a diagram for explaining a normal operation of an engine unit in the first embodiment.
[FIG. 4] Fig. 4 is a diagram for explaining a reverse rotation start-up operation of the engine unit in the first embodiment.
[FIG. 5] Fig. 5 is a flowchart showing an engine start-up process in the first embodiment.
[FIG. 6] Fig. 6 is a flowchart showing the engine start-up process in the first embodiment.
[FIG. 7] Fig. 7 is a flowchart showing the engine start-up process in the first embodiment.
[FIG. 8] Fig. 8 is a diagram showing an example of the specific configuration of a valve driver in the first embodiment.
[FIG. 9] Fig. 9 is a diagram for explaining a reverse rotation start-up operation of an engine unit in a second embodiment.
[FIG. 10] Fig. 10 is a diagram showing an example of the specific configuration of a valve driver in the second embodiment.
[FIG. 11] Fig. 11 is a diagram for explaining cam profiles of a main intake cam and a sub intake cam in the second embodiment.
[FIG. 12] Fig. 12 is a schematic side view for explaining the configuration of an engine unit in a third embodiment.
[FIG. 13] Fig. 13 is a diagram for explaining a normal operation of the engine unit in the third embodiment.
[FIG. 14] Fig. 14 is a diagram for explaining a reverse rotation start-up operation of the engine unit in the third embodiment.
[FIG. 15] Fig. 15 is a diagram for explaining the reverse rotation start-up operation of the engine unit in the third embodiment.
[FIG. 16] Fig. 16 is a diagram for explaining another example of the reverse rotation start-up operation of the engine unit in the third embodiment.

### [Description of Embodiments]

An engine system and a motorcycle according to embodiments of the present invention will be described below with reference to the drawings. The motorcycle is an example of a straddled vehicle.

### [A] First Embodiment

### (1) Motorcycle

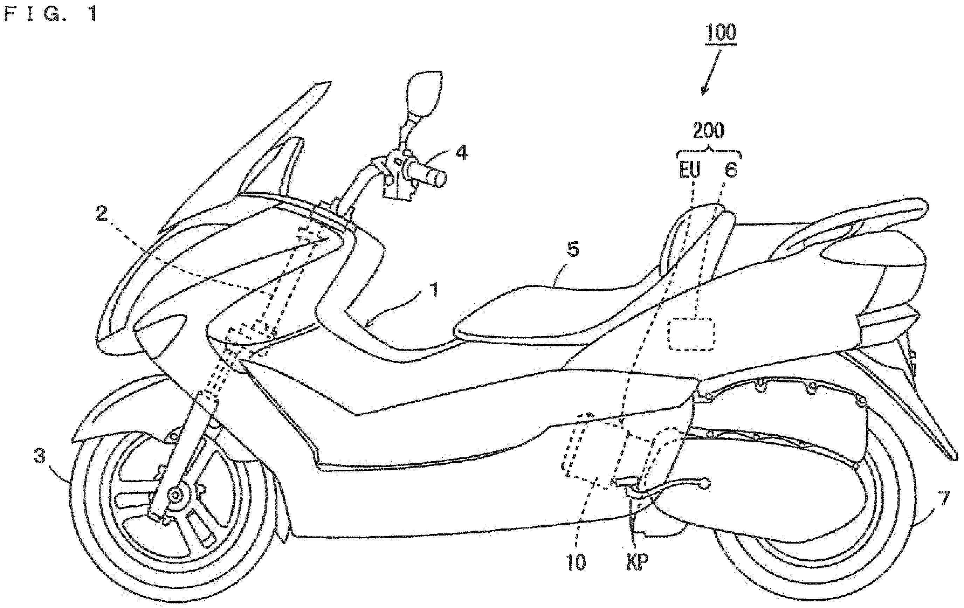

Fig. 1 is a schematic side view showing a general configuration of a motorcycle according to a first embodiment of the present invention. In the motorcycle 100 of Fig. 1, a front fork 2 is provided at a front portion of a vehicle body 1 to be swingable to the right and the left. A handle 4 is attached to an upper end of the front fork 2, and a front wheel 3 is rotatably attached to a lower end of the front fork 2.

A seat 5 is provided at a substantially central upper portion of the vehicle body 1. An ECU (Engine Control Unit) 6 and an engine unit EU are provided below the seat 5. The ECU 6 and the engine unit EU constitute an engine system 200. A rear wheel 7 is rotatably attached to a lower portion of a rear end of the vehicle body 1. The rear wheel 7 is driven by motive power generated by the engine unit EU so as to rotate the rear wheel 7.

### (2) Engine System

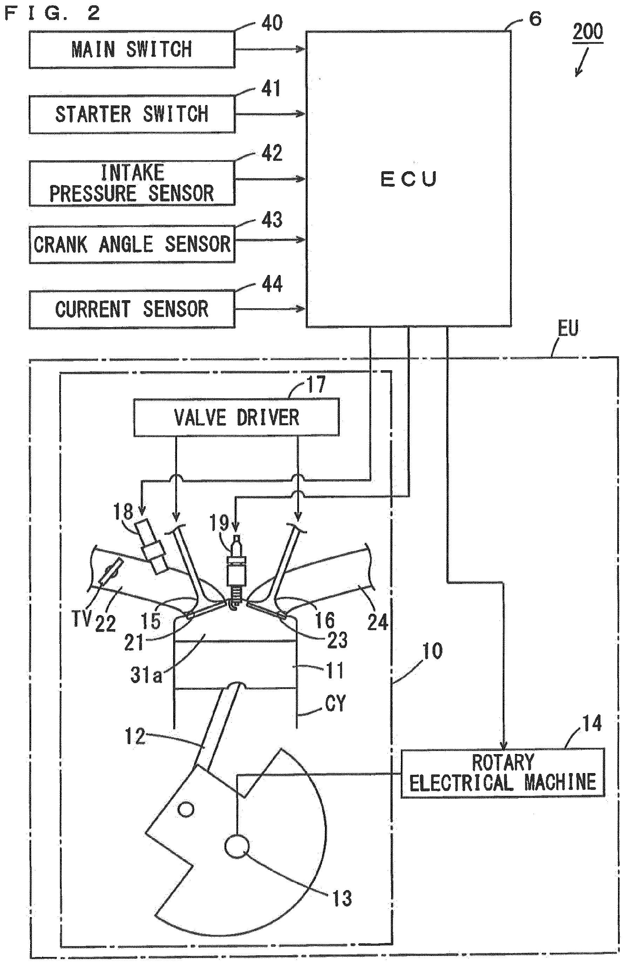

Fig. 2 is a schematic diagram for explaining the configuration of the engine system 200. As shown in Fig. 2, the engine unit EU includes an engine 10 and a rotary electrical machine 14. The engine 10 is a single-cylinder four-cycle engine in this embodiment. The engine 10 includes a cylinder CY, a piston 11, a connecting rod 12, a crankshaft 13, an intake valve 15, an exhaust valve 16, a valve driver 17, an injector 18, and an ignition device 19.

The piston 11 is provided to be reciprocatable in the cylinder CY and connected to the crankshaft 13 via the connecting rod 12. The crankshaft 13 is provided with the rotary electrical machine 14. The rotary electrical machine 14 can drive the crankshaft 13 in a forward direction or a reverse direction by electrical power supplied from a battery, not shown, and can also charge the battery by electrical power generated by the rotation of the crankshaft 13. The forward direction is a direction in which the crankshaft 13 is rotated during a normal operation of the engine 10, whereas the reverse direction is a direction opposite to the forward direction. The rotary electrical machine 14 transmits a torque directly to the crankshaft 13 without a reduction gear interposed therebetween. As such, the crankshaft 13 can be driven without any machine sounds generated by the reduction gear. Rotation of the crankshaft 13 in the forward direction (forward rotation) is transmitted to the rear wheel 7, so that the rear wheel 7 is driven to rotate. A starter motor and a generator may be provided separately in place of the rotary electrical machine 14.

A combustion chamber 31a is divided into sections by the cylinder CY and the piston 11. The combustion chamber 31a communicates with an intake passage 22 through an intake port 21 and communicates with an exhaust passage 24 through an exhaust port 23. An intake valve 15 is provided to open and close the intake port 21, and an exhaust valve 16 is provided to open and close the exhaust port 23. The intake valve 15 and the exhaust valve 16 are driven by the valve driver 17. A throttle valve TV for adjusting a flow rate of air flowing in from the outside is provided at the intake passage 22. The injector 18 is configured to inject fuel into the intake passage 22. The ignition device 19 includes an ignition coil and an ignition plug and is configured to ignite a fuel-air mixture in the combustion chamber 31a.

The fuel injected by the injector 18 is mixed with air and then guided to the combustion chamber 31a, and the fuel-air mixture in the combustion chamber 31a is ignited by the ignition device 19. The reciprocating motion of the piston 11 due to the combustion of the fuel-air mixture is converted into the rotational motion of the crankshaft 13. The torque of the crankshaft 13 is transmitted to the rear wheel 7 of Fig. 1, so that the rear wheel 7 is driven.

The ECU 6 includes a CPU (Central Processing Unit) and a memory, for example. A microcomputer may be used in place of the CPU and the memory. The ECU 6 is electrically connected with a main switch 40, a starter switch 41, an intake pressure sensor 42, a crank angle sensor 43, and a current sensor 44. The main switch 40 is provided below the handle 4 of Fig. 1, for example, and the starter switch 41 is provided on the handle 4 of Fig. 1, for example. The main switch 40 and the starter switch 41 are operated by a rider. The intake pressure sensor 42 detects pressure in the intake passage 22. The crank angle sensor 43 detects an angle representing a rotational position of the crankshaft 13 (hereinafter referred to as crank angle). The current sensor 44 detects a current flowing through the rotary electrical machine 14 (hereinafter referred to as motor current).

The operations of the main switch 40 and the starter switch 41 are applied as operation signals to the ECU 6, and the results of a detection by the intake pressure sensor 42, the crank angle sensor 43, and the current sensor 44 are applied as detection signals to the ECU 6. The ECU 6 controls the rotary electrical machine 14, the injector 18, and the ignition device 19 on the basis of the applied operation and detection signals.

### (3) Operation of Engine Unit

For example, the engine 10 is started when the main switch 40 of Fig. 2 is turned on and the starter switch 41 is turned on, whereas the engine 10 is stopped when the main switch 40 of Fig. 2 is turned off. Start-up of the engine 10 refers to the combustion in the combustion chamber 31a being started by the start of the fuel injection by the injector 18 and the ignition by the ignition device 19. Stopping of the engine 10 refers to the combustion in the combustion chamber 31a being stopped by stopping at least one of the fuel injection by the injector 18 and the ignition by the ignition device 19.

Also, when a predetermined idle stop condition is satisfied, the engine 10 is automatically stopped. After that, when a predetermined re-start condition is satisfied, the engine 10 is automatically re-started. The idle stop condition may include a condition that relates to at least one of, for example, throttle opening (the degree of opening of a throttle valve TV), vehicle speed, and rotation speed of the engine 10, and may further include another condition such as a condition that a brake lever is operated. The re-start condition refers to, for example, the throttle opening being larger than 0 when an accelerator grip is operated, and may include another condition such as a condition that the operation of the brake lever is released.

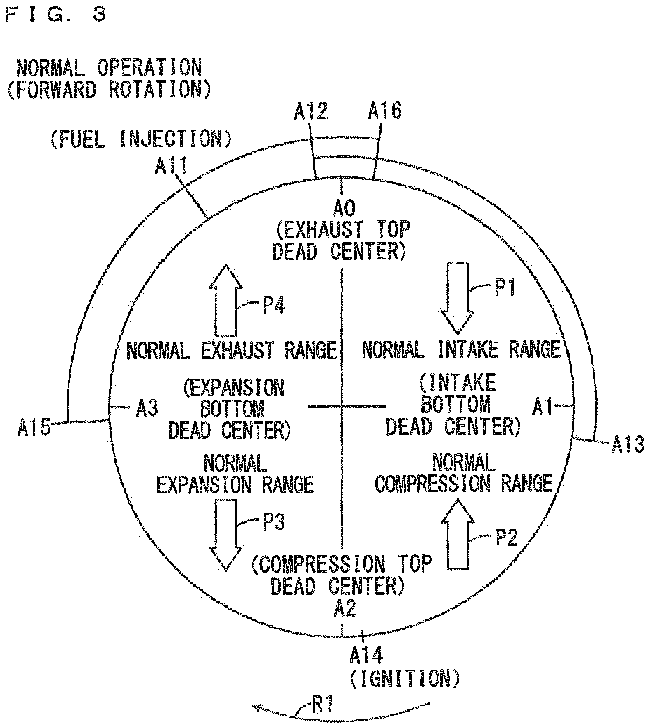

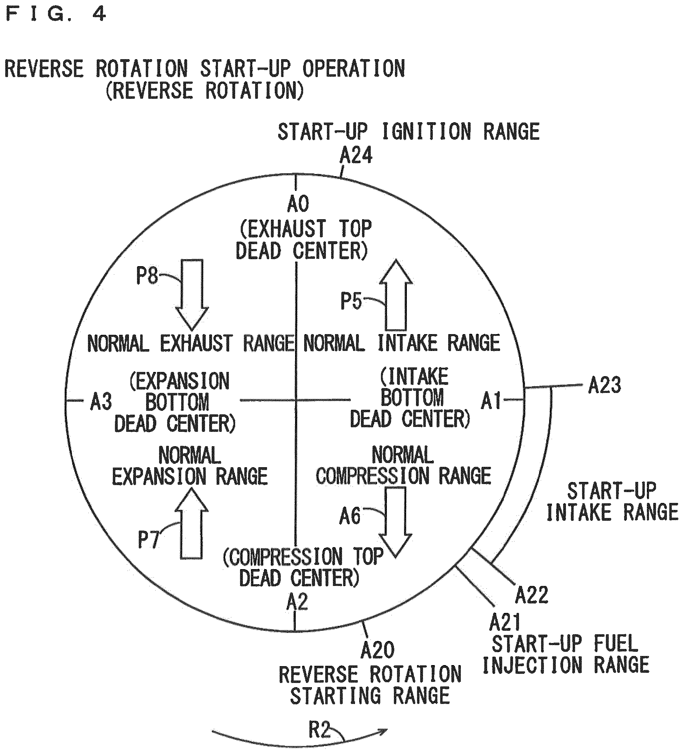

During the start-up of the engine 10, the engine unit EU performs a reverse rotation start-up operation. Thereafter, the engine unit EU performs a normal operation that includes an intake stroke, a compression stroke, an expansion stroke, and an exhaust stroke. Fig. 3 is a diagram for explaining an operation during the normal operation of the engine unit EU (hereinafter also referred to as normal operation). Fig. 4 is a diagram for explaining a reverse rotation start-up operation of the engine unit EU.

In the following description, a top dead center through which the piston 11 passes at the time of shifting from the compression stroke to the expansion stroke is referred to as a compression top dead center, and a top dead center through which the piston 11 passes at the time of shifting from the exhaust stroke to the intake stroke is referred to as an exhaust top dead center, during the normal operation of the engine 10. A bottom dead center through which the piston 11 passes at the time of shifting from the intake stroke to the compression stroke is referred to as an intake bottom dead center, and a bottom dead center through which the piston 11 passes at the time of shifting from the expansion stroke to the exhaust stroke is referred to as an expansion bottom dead center. Ranges of the crank angle that correspond to the intake stroke, the compression stroke, the expansion stroke, and the exhaust stroke during the normal operation of the engine 10 are referred to as a normal intake range, a normal compression range, a normal expansion range, and a normal exhaust range, respectively.

In Figs. 3 and 4, the range of the crank angle which is equivalent to two rotations (720 degrees) of the crankshaft 13 is represented by one circle. The two rotations of the crankshaft 13 are equivalent to one cycle of the engine 10. The crank angle sensor 43 of Fig. 2 detects a rotational position in a range in which the crankshaft 13 makes one rotation (360 degrees). Based on the pressure in the intake passage 22 detected by the intake pressure sensor 42, the ECU 6 determines to which one of the two rotations of the crankshaft 13 equivalent to one cycle of the engine 10 the angle detected by the crank angle sensor 43 corresponds. Thus, the ECU 6 can acquire the rotational position in the range of two rotations (720 degrees) of the crankshaft 13 as the crank angle.

In Figs. 3 and 4, an angle A0 is a crank angle when the piston 11 (Fig. 2) is positioned at the exhaust top dead center, an angle A2 is a crank angle when the piston 11 is positioned at the compression top dead center, an angle A1 is a crank angle when the piston 11 is positioned at the intake bottom dead center, and an angle A3 is a crank angle when the piston 11 is positioned at the expansion bottom dead center. An arrow R1 represents a direction in which the crank angle changes during the forward rotation of the crankshaft 13, an arrow R2 represents a direction in which the crank angle changes during the reverse rotation of the crankshaft 13. Arrows P1 to P4 represent directions in which the piston 11 moves during the forward rotation of the crankshaft 13. Arrows P5 to P8 represent directions in which the piston 11 moves during the reverse rotation of the crankshaft 13.

### (3-1) Normal Operation

The normal operation of the engine unit EU will be described with reference to Fig. 3. In the normal operation, the crankshaft 13 (Fig. 2) is rotated forward, so that the crank angle changes in the direction of the arrow R1. In this case, as indicated by the arrows P1 to P4, the piston 11 (Fig. 2) is lowered in the range from the angle A0 to the angle A1, raised in the range from the angle A1 to the angle A2, lowered in the range from the angle A2 to the angle A3, and raised in the range from the angle A3 to the angle A0. In the forward direction, the range from the angle A0 to the angle A1 is equivalent to the normal intake range and corresponds to the intake stroke during the normal operation. The range from the angle A1 to the angle A2 is equivalent to the normal compression range and corresponds to the compression stroke during the normal operation. The range from the angle A2 to the angle A3 is equivalent to the normal expansion range and corresponds to the expansion stroke during the normal operation. The range from the angle A3 to the angle A0 is equivalent to the normal exhaust range and corresponds to the exhaust stroke during the normal operation.

At an angle A11, the fuel is injected into the intake passage 22 (Fig. 2) by the injector 18 (Fig. 2). In the forward direction, the angle A11 is positioned at a further advanced angle than the angle A0. The intake port 21 (Fig. 2) is subsequently opened by the intake valve 15 (Fig. 2) in a range from an angle A12 to an angle A13. In the forward direction, the angle A12 is positioned at a further retarded angle than the angle A11 and at a further advanced angle than the angle A0, and the angle A13 is positioned at a further retarded angle than the angle A1. Thus, a fuel-air mixture containing air and fuel is introduced into the combustion chamber 31a (Fig. 2) through the intake port 21.

Then, at an angle A14, the fuel-air mixture in the combustion chamber 31a (Fig. 2) is ignited by the ignition device 19 (Fig. 2). In the forward direction, the angle A14 is positioned at a further advanced angle than the angle A2. The ignition of the fuel-air mixture causes explosion in the combustion chamber 31a (combustion of the fuel-air mixture). Energy generated by the combustion of the fuel-air mixture turns to a driving force of the piston 11. After that, the exhaust port 23 (Fig. 2) is opened by the exhaust valve 16 (Fig. 2) in the range from an angle A15 to an angle A16. The angle A15 is positioned at a further advanced angle than the angle A3, and the angle A16 is positioned at a further retarded angle than the angle A0 in the forward direction. This allows the combusted gas to be discharged from the combustion chamber 31a through the exhaust port 23.

### (3-2) Reverse Rotation Start-up Operation

A reverse rotation start-up operation of the engine unit EU will be described with reference to Fig. 4. In this embodiment, the crank angle is adjusted to an angle A20 in the normal compression range before the reverse rotation start-up operation. The angle A20 is an example of a reverse rotation starting range.

The reverse rotation start-up operation includes a reverse rotation operation in which the rotary electrical machine 14 rotates the crankshaft 13 in the reverse direction. The reverse rotation operation causes the crank angle to change in the direction of the arrow R2. In this case, as denoted by the arrows P5 to P8, the piston 11 is lowered in the range from the angle A2 to the angle A1, raised in the range from the angle A1 to the angle A0, lowered in the range from the angle A0 to the angle A3, and raised in the range from the angle A3 to the angle A2. The direction in which the piston 11 moves during the reverse rotation of the crankshaft 13 is opposite to the direction in which the piston 11 moves during the forward rotation of the crankshaft 13.

At an angle A21, fuel is injected to the intake passage 22 (Fig. 2) by the injector 18 (Fig. 2). The angle A21 is an example of a start-up fuel injection range within the normal compression range. In the reverse direction, the angle A21 is positioned at a further retarded angle than the angle A20. The intake port 21 (Fig. 2) is opened by the intake valve 15 (Fig. 2) in a range from an angle A22 to an angle A23. The range from the angle A22 to the angle A23 is an example of a start-up intake range. In the reverse direction, the angle A22 is positioned at a further retarded angle than the angle A21 and at a further advanced angle than the angle A1, and the angle A23 is positioned at a slightly further retarded angle than the angle A1. In the range from the angle A2 to the angle A1, the piston 11 is lowered, and therefore, when the intake port 21 is opened in the range from the angle A22 to the angle A23, a fuel-air mixture including air and fuel is introduced into the combustion chamber 31a through the intake port 21 from the intake passage 22.

On the other hand, in a range from the angle A23 to the angle A0, the intake valve 15 is not lifted, and the intake port 21 is not opened. As such, the fuel-air mixture introduced into the combustion chamber 31a is compressed. Then, at an angle A24 in the normal intake range, the fuel-air mixture in the combustion chamber 31a is ignited by the ignition device 19 (Fig. 2), and also the direction in which the crankshaft 13 is driven by the rotary electrical machine 14 is switched from the reverse direction to the forward direction. In the reverse direction, the angle A24 is positioned at a further retarded angle than the angle A23 and at a further advanced angle than the angle A0. The angle A24 is an example of a start-up ignition range. For example, when a motor current detected by the current sensor 44 of Fig. 2 reaches a threshold value, the fuel-air mixture is ignited by the ignition device 19. In this case, the crankshaft 13 is driven in the forward direction by combustion of the fuel-air mixture, so that the forward torque of the crankshaft 13 is increased. Thus, the crank angle can exceed the angle A2 corresponding to the first compression top dead center. After that, the engine unit EU is shifted to the aforementioned normal operation.

If the intake port 21 is opened in a range from the angle A23 to the angle A22 immediately after the fuel-air mixture is ignited at the angle A24, combusted gas flows out from the combustion chamber 31a through the intake port 21 to the intake passage 22. In that case, the combusted gas remaining in the intake passage 22 is introduced into the combustion chamber 31a in a subsequent intake stroke (normal intake range). Thus, combustion sometimes cannot appropriately be generated in the ignition operation at the angle A14 (Fig. 3).

As such, the combusted gas may be discharged from the combustion chamber 31a through the exhaust port 23 after the reverse rotation operation of the rotary electrical machine 14 and before the crank angle reaches the angle A2 corresponding to the first compression top dead center. For example, after the fuel-air mixture is ignited at the angle A24, the intake port 21 is not opened in the range from the angle A23 to the angle A22, but the exhaust port 23 may be opened in part of the normal compression range. In this case, the combusted gas, which is generated by the ignition at the angle A24, is discharged through the exhaust port 23 without flowing out to the intake passage 22. Thus, the fuel-air mixture can appropriately be introduced into the combustion chamber 31a in the subsequent intake stroke, and combustion can appropriately be generated in the ignition operation at the angle A14 (Fig. 3).

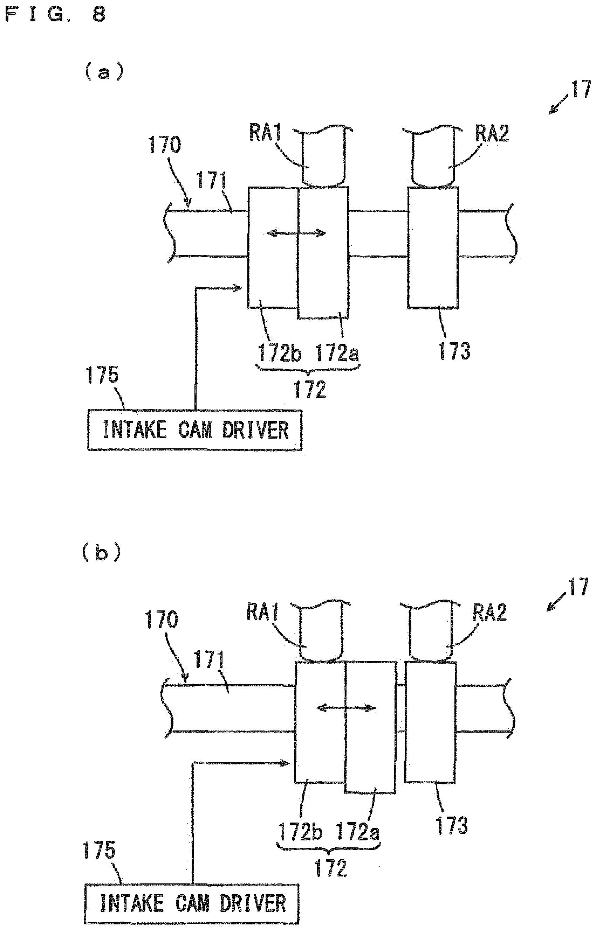

Alternatively, the intake port 21 may be opened in the range from the angle A23 to the angle A22, and the exhaust port 23 may be opened in part of the normal compression range both during and immediately after the reverse rotation operation of the rotary electrical machine 14. In this case, the combusted gas is further prevented from flowing out to the intake passage 22 as compared to a case where only the intake port 21 is opened immediately after the reverse rotation operation. Thus, the fuel-air mixture can appropriately be introduced into the combustion chamber 31a in the subsequent intake stroke, and the combustion can appropriately be generated. Also, since the range of the crank angle in which the intake port 21 and the exhaust port 23 are opened is constant during and immediately after the reverse rotation operation, the configuration and the operation of the valve driver 17 can be simplified. In order to open the exhaust port 23 in the normal compression range, a configuration in which an exhaust cam acting on the exhaust valve 16 is switched can be utilized, similarly to the example of Fig. 8 described below.

While the start-up intake range includes part of the normal compression range and part of the normal intake range in this example, the start-up intake range may include only part of the normal compression range.

### (4) Engine Start-up Process

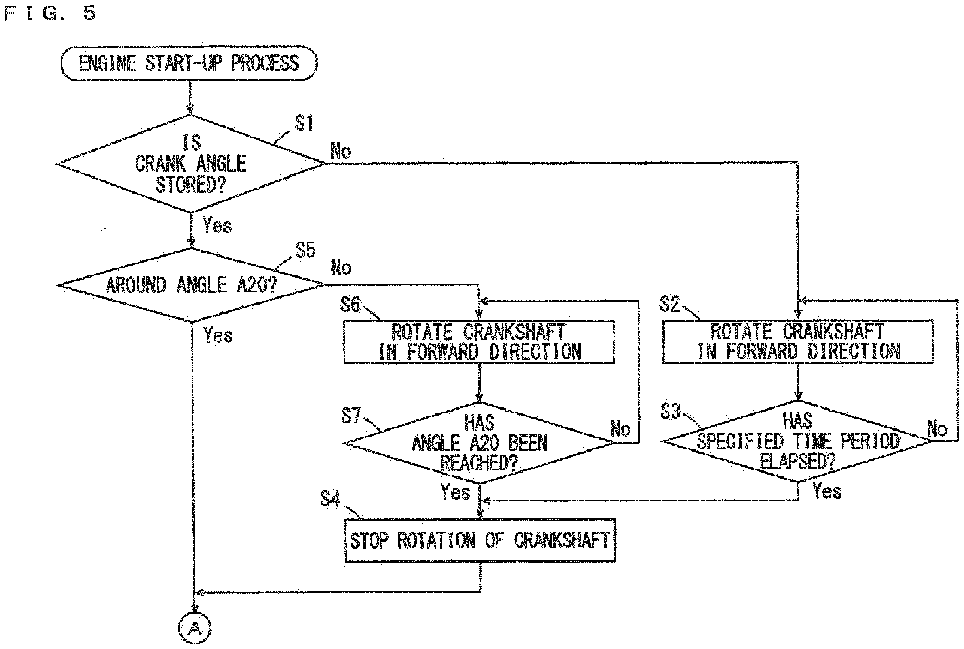

During the start-up of the engine 10, the ECU 6 performs an engine start-up process based on a control program that is stored in advance in the memory. Figs. 5 to 7 are flowcharts showing the engine start-up process. The engine start-up process is performed when the main switch 40 and the starter switch 41 of Fig. 2 are turned on, or when the idle stop condition as described above is satisfied, for example.

As shown in Fig. 5, first of all, the ECU 6 determines whether the current crank angle is stored in the memory (step S1). For example, the current crank angle is not stored immediately after the main switch 40 is turned on, whereas the current crank angle is stored with the engine 10 stopped when the idle stop condition is satisfied.

When the current crank angle is not stored, the ECU 6 controls the rotary electrical machine 14 such that the crankshaft 13 is rotated forward (step S2). In this case, the torque of the crankshaft 13 by the rotary electrical machine 14 is adjusted based on a detection signal from the current sensor 44 (Fig. 2) such that the crank angle does not exceed the angle A2 corresponding to the compression top dead center (Figs. 3 and 4).

Then, the ECU 6 determines whether a specified time period has elapsed after the rotation of the crankshaft 13 is started in step S2 (step S3). If the specified time period has not elapsed, the ECU 6 controls the rotary electrical machine 14 such that the forward rotation of the crankshaft 13 is continued. After the specified time period has elapsed, the ECU 6 controls the rotary electrical machine 14 such that the forward rotation of the crankshaft 13 is stopped (step S4). Thus, the crank angle is adjusted to around the angle A20 of Fig. 4.

In step S2, when the crankshaft 13 is rotated in the forward direction, the crank angle may be detected, and then the crank angle may be adjusted to the angle A20 of Fig. 4 based on a detected value of the crank angle.

On the other hand, in step S1, when the current crank angle is stored, the ECU 6 determines whether the current angle is around the angle A20 (Fig. 4) (step S5). For example, if the difference between the current crank angle and the angle A20 is within a predetermined acceptable range, it is determined that the current crank angle is around the angle A20. In contrast, if the difference between the current crank angle and the angle A20 is out of the acceptable range, it is determined that the current angle is not around the angle A20.

If the current crank angle is not around the angle A20, the ECU 6 controls the rotary electrical machine 14 such that the crankshaft 13 is rotated forward (step S6). Then, the ECU 6 determines whether the current crank angle has reached the angle A20 based on detection results of the intake pressure sensor 42 and the crank angle sensor 43 (step S7). When the current crank angle has not reached the angle A20, the ECU 6 controls the rotary electrical machine 14 such that the forward rotation of the crankshaft 13 is continued. When the current crank angle has reached the angle A20, the ECU 6 controls the rotary electrical machine 14 such that the forward rotation of the crankshaft 13 is stopped (step S4). Thus, the crank angle is adjusted to the angle A20 of Fig. 4.

In processes in steps S6, S7, the crank angle is highly accurately adjusted, and also power consumption by the rotary electrical machine 14 is reduced as compared to the above-described processes in steps S2, S3.

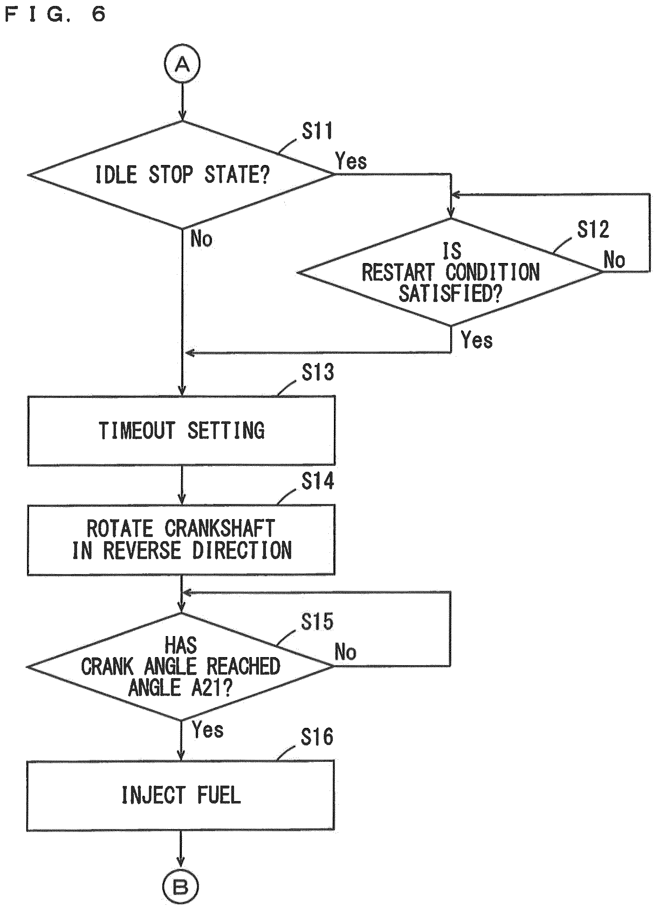

After the crank angle is adjusted to around the angle A20 due to the forward rotation of the crankshaft 13, a process of step S11 of Fig. 6 is carried out. If the current crank angle is around the angle A20 in step S5, the process of step S11 of Fig. 6 is directly carried out.

As shown in Fig. 6, the ECU 6 determines whether the engine 10 is in an idle stop state at the current time (step S11). If the engine 10 is not in the idle stop state, the ECU 6 proceeds to step S13. If the engine 10 is in the idle stop state, the ECU 6 determines whether the re-start condition is satisfied (step S12). The ECU 6 repeats the process of step S12 until the re-start condition is satisfied. If the re-start condition is satisfied, the ECU 6 proceeds to step S13.

In step S13, the ECU 6 performs a timeout setting for the engine start-up process. Specifically, an elapsed time is measured from that point of time. When the elapsed time has reached a predetermined termination time, the engine start-up process is forcibly terminated (steps S25 to S27 described below).

Then, the ECU 6 controls the rotary electrical machine 14 such that the crankshaft 13 is rotated in reverse (step S14). The ECU 6 then determines whether the current crank angle has reached the angle A21 of Fig. 4 based on detection signals from the intake pressure sensor 42 (Fig. 2) and the crank angle sensor 43 (Fig. 2) (step S15). The ECU 6 repeats the process of step S15 until the current crank reaches the angle A21. When the current crank angle has reached the angle A21, the ECU 6 controls the injector 18 such that the fuel is injected to the intake passage 22 (Fig. 2) (step S16). In this case, the ECU 6 may control the injector 18 such that when the crank angle has reached the angle A21, a pulse signal is applied from the crank angle sensor 43 to the ECU 6, and the fuel is injected in response to the pulse signal.

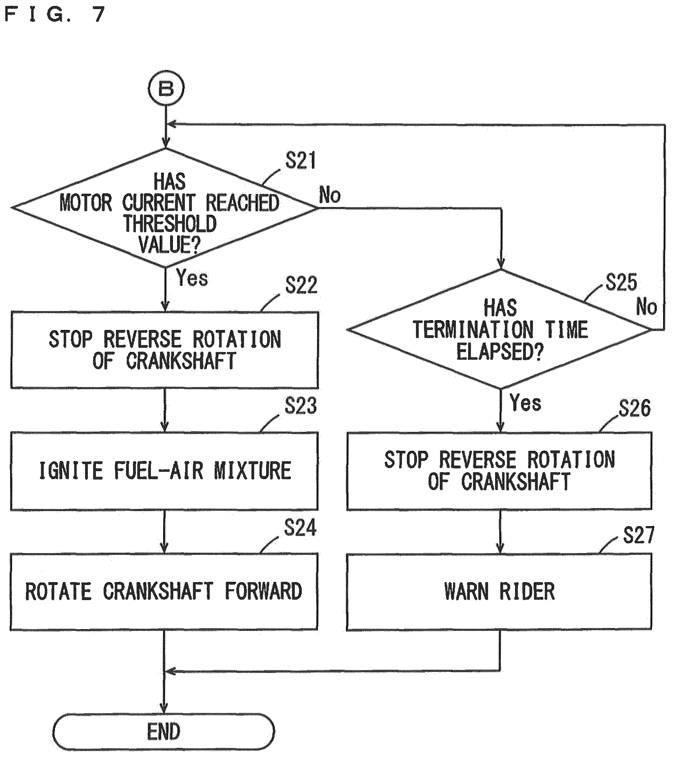

Then, as shown in Fig. 7, the ECU 6 determines whether the motor current has reached a predetermined threshold value based on the detection signal from the current sensor 44 (step S21). In this case, the motor current becomes larger as the crank angle comes closer to the angle A0 of Fig. 4. In this example, when the crank angle has reached the angle A24 of Fig. 4, the motor current has reached the threshold value. It may be determined whether the crank angle has reached the angle A24 based on the crank angle detected by the crank angle sensor 43 in place of the motor current detected by the current sensor 44.

When the motor current has reached the predetermined threshold value, the ECU 6 controls the rotary electrical machine 14 such that the reverse rotation of the crankshaft 13 is stopped (step S22), and controls the ignition device 19 such that the fuel-air mixture in the combustion chamber 31a is ignited (step S23). Also, the ECU 6 controls the rotary electrical machine 14 such that the crankshaft 13 is rotated in the forward direction (step S24). Thus, the ECU 6 terminates the engine start-up process. After that, the ECU 6 performs a control operation corresponding to the normal operation of Fig. 3.

Driving of the crankshaft 13 by the rotary electrical machine 14 is stopped after a certain time period has elapsed after the process of step S24, for example. When the forward torque of the crankshaft 13 is sufficiently increased by combustion energy, the process of step S24 does not have to be performed. In this case, the crankshaft 13 is not driven in the forward direction by the rotary electrical machine 14.

If the motor current has not reached the threshold value in step S21, the ECU 6 determines whether the predetermined termination time has elapsed after the timeout setting of step S13 of Fig. 6 (step S25). A problem or some trouble may be experienced with the engine unit EU, e.g., the trouble may include an operational failure of the rotary electrical machine 14, an operational failure of the valve driver 17 or the like. Because of such trouble with the engine unit EU, the predetermined termination time may sometimes have elapsed after the timeout setting while the current flowing through the rotary electrical machine 14 does not reach the threshold value. If the termination time has not elapsed, the ECU 6 returns to the process of step S21. If the termination time has elapsed, the ECU 6 controls the rotary electrical machine 14 such that the reverse rotation of the crankshaft 13 is stopped (step S26), and also warns the rider that the trouble has occurred in the engine unit EU (step S27). Specifically, an alarm lamp, not shown, for example, is lit. Thus, the ECU 6 terminates the engine start-up process. The reverse rotation start-up operation of Fig. 4 is implemented by such an engine start-up process.

### (5) Example of Configuration of Valve Driver

Fig. 8 is a diagram showing an example of a specific configuration of the valve driver 17. The valve driver 17 of Figs. 8(a) and 8(b) includes a camshaft 170, an intake rocker arm RA1, and an exhaust rocker arm RA2. The camshaft 170 includes a shaft member 171, an intake cam structure 172, and an exhaust cam 173. The shaft member 171 is rotated in conjunction with the rotation of the crankshaft 13. The intake cam structure 172 and the exhaust cam 173 are provided at the shaft member 171 such that the intake cam structure 172 and the exhaust cam 173 are rotated integrally with the shaft member 171.

The intake cam structure 172 includes a main intake cam 172a and a sub intake cam 172b. The main intake cam 172a and the sub intake cam 172b are configured to be integrally movable in an axial direction with respect to the shaft member 171. The engine 10 includes an intake cam driver 175 that drives the intake cam structure 172. The intake cam driver 175 moves the intake cam structure 172 between a normal position at which the main intake cam 172a abuts against the intake rocker arm RA1 (the position shown in Fig. 8(a)) and a start-up position in which the sub intake cam 172b abuts against the intake rocker arm RA1 (the position shown in Fig. 8(b)). The exhaust cam 173 abuts against the exhaust rocker arm RA2.

The intake cam structure 172 is held in the normal position of Fig. 8(a) during the forward rotation of the crankshaft 13. Thus, the main intake cam 172a drives the intake valve 15 of Fig. 2 via the intake rocker arm RA1, and the exhaust cam 173 drives the exhaust valve 16 of Fig. 2 via the exhaust rocker arm RA2. The main intake cam 172a is configured to lift the intake valve 15 in the range from the angle A12 to the angle A13 of Fig. 3 and to lift the exhaust valve 16 in the range from the angle A15 to the angle A16 in the forward direction.

On the other hand, the intake cam structure 172 is held in the start-up position of Fig. 8(b) during the reverse rotation of the crankshaft 13. Thus, the sub intake cam 173b drives the intake valve 15 of Fig. 2 via the intake rocker arm RA1. The sub intake cam 173b is configured to lift the intake valve 15 in the range from the angle A22 to the angle A23 of Fig. 4 and not to lift the intake valve 15 in the range from the angle A23 to the angle A0 in the reverse direction.

In this way, the main intake cam 172a and the sub intake cam 173b are selectively used during the forward rotation and during the reverse rotation of the crankshaft 13. Thus, the intake valve 15 can be lifted at a time suitable for each of the normal operation and the reverse rotation start-up operation without complication of the configuration of the valve driver 17.

### (6) Effects

In the engine system 200 according to the above-described embodiment, during the start-up of the engine 10, when the crank angle is in the normal compression range while the crankshaft 13 is rotated in reverse, the intake port 21 is opened, and the fuel-air mixture is introduced into the combustion chamber 31a. Also, when the crank angle is in the normal intake range, the fuel-air mixture in the combustion chamber 31a is compressed. After that, when the crank angle is at the angle A24 before reaching the angle A0 corresponding to the exhaust top dead center, the fuel-air mixture in the combustion chamber 31a is ignited, and its combustion energy drives the crankshaft 13 in the forward direction. In this case, since the angle range of the reverse rotation of the crankshaft 13 is small (specifically not more than 360 degrees), the time period for which the crankshaft 13 is rotated in reverse is shortened. Thus, the engine 10 can be started in a shorter time at lower energy.

Furthermore, in the above-described embodiment, the crank angle is adjusted to the reverse rotation starting range (angle A20) before the reverse rotation start-up operation of the crankshaft 13. Thus, even if there is a variation in crank angle of the stopped engine 10, the fuel-air mixture can appropriately be introduced into the combustion chamber 31a, and the introduced fuel-air mixture can appropriately be compressed in the reverse rotation start-up operation. Thus, the fuel-air mixture can appropriately be combusted.

Furthermore, in the above-described embodiment, in the reverse rotation start-up operation, when the crank angle is in the start-up fuel injection range (angle A21) within the normal compression range, the fuel is injected into the intake passage 22 by the injector 18. Thus, the fuel-air mixture can appropriately be introduced into the combustion chamber 31a during the reverse rotation of the crankshaft 13.

### [B] Second Embodiment

Regarding an engine system and a straddled vehicle according to a second embodiment of the present invention, a difference of the second embodiment from the above-described first embodiment will be described below.

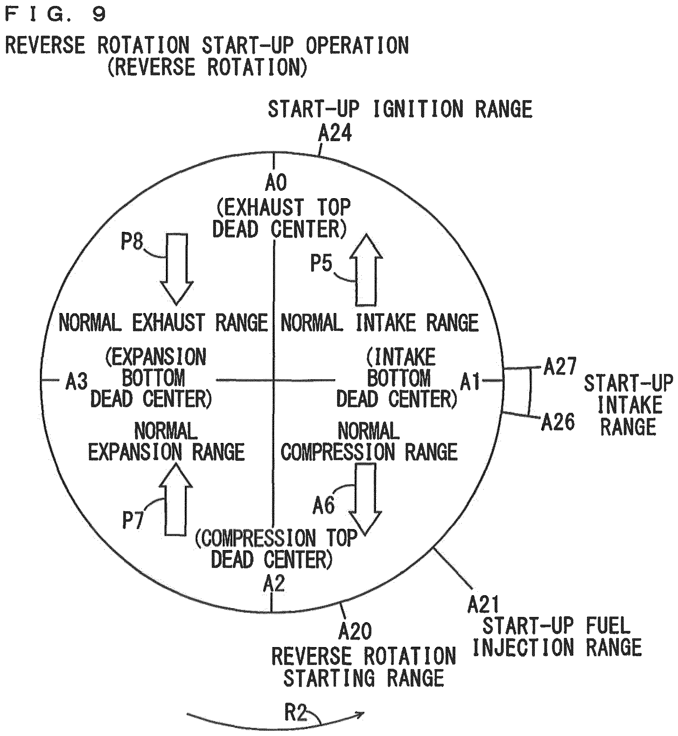

A normal operation of the engine unit EU in the second embodiment is the same as the above-described example of Fig. 3, and a reverse rotation start-up operation in the second embodiment differs from the above-described example of Fig. 4. Fig. 9 is a diagram for explaining the reverse rotation start-up operation of the engine unit EU in the second embodiment.

The difference of the example of Fig. 9 from the example of Fig. 4 is that the intake port 21 (Fig. 2) is opened in a range from an angle A26 to an angle A27, not in the range from the angle A22 (Fig. 4) to the angle A23 (Fig. 4). In the reverse direction, the angle A26 is positioned at a further advanced angle than the angle A1, and positioned at a further retarded angle than the angle A13 of Fig. 3 or at a position equal to the angle A13. Also, in the reverse direction, the angle A27 is positioned at a further retarded angle than the angle A1. The range from the angle A26 to the angle A27 is an example of the start-up intake range. The range from the angle A26 to the angle A27 is included in a range of the crank angle in which the intake port 21 is opened in the normal operation (the range from the angle A12 to the angle A13 of Fig. 3).

The piston 11 is lowered in the range from the angle A26 to the angle A1. Therefore, when the intake port 21 is opened in the range from A26 to the angle A1, the fuel-air mixture in the intake passage 22 is introduced into the combustion chamber 31a through the intake port 21.

After that, similarly to the example of Fig. 4, the fuel-air mixture introduced into the combustion chamber 31a is compressed, and the fuel-air mixture in the combustion chamber 31a is ignited by the ignition device 19 (Fig. 2) at the angle A24. The crankshaft 13 is driven in the forward direction by the combustion of the fuel-air mixture, so that the crank angle exceeds the angle A2 corresponding to the first compression top dead center. Then, the engine unit EU is shifted to the normal operation.

While the start-up intake range includes part of the normal compression range and part of the normal intake range in this example, the start-up intake range may include only part of the normal compression range. Also, while the fuel injection by the injector 18 is carried out in the same crank angle range as the example of Fig. 4, and the ignition by the ignition device 19 is carried out in the same crank angle range as the example of Fig. 4, the fuel injection by the injector 18 and the ignition by the ignition device 19 may be carried out in another crank angle range. For instance, the fuel injection by the injector 18 may be carried out in a range from a further retarded angle than the angle A21 to a further advanced angle than the angle A26 in the reverse direction, and the ignition by the ignition device 19 may be carried out in a range from a further retarded angle than the angle A27 to a further advanced angle than the angle A24 in the reverse direction.

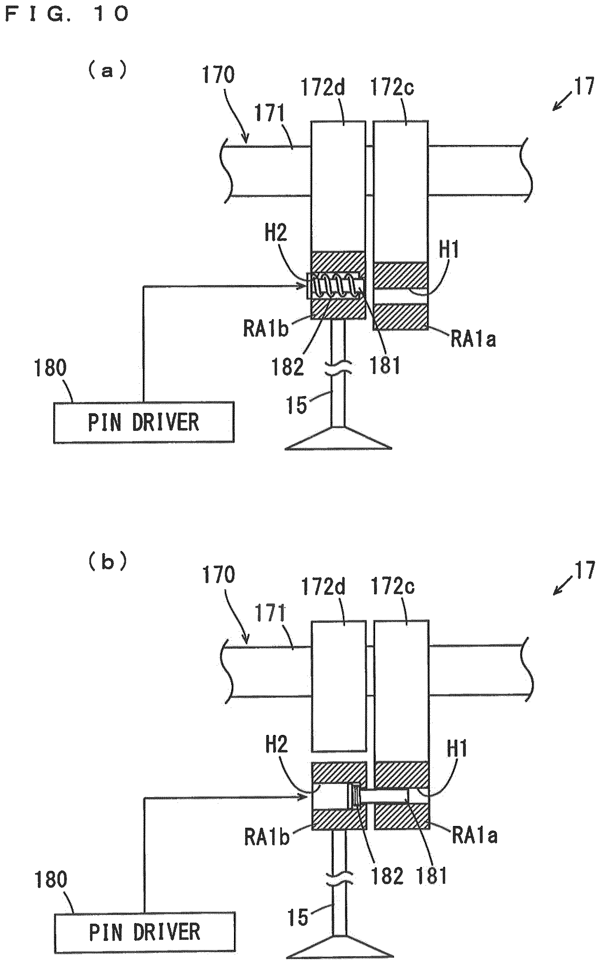

Fig. 10 is a diagram showing an example of a specific configuration of the valve driver 17 in the second embodiment. The example of Fig. 10 differs from the example of Fig. 8 in the following point. In the example of Fig. 10, the camshaft 170 includes a main intake cam 172c and a sub intake cam 172d in place of the intake cam structure 172 of Fig. 8. The main intake cam 172c and the sub intake cam 172d are fixed to the shaft member 171.

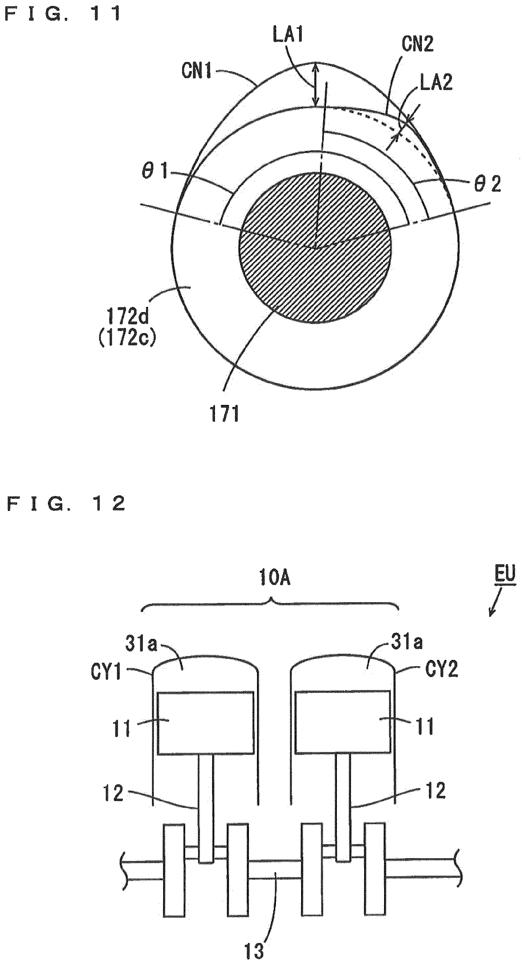

Fig. 11 is a diagram for explaining cam profiles of the main intake cam 172c and the sub intake cam 172d. As shown in Fig. 11, the main intake cam 172c has a cam nose CN1, and the sub intake cam 172d has a cam nose CN2. The entire cam nose CN2 is provided to overlap part of the cam nose CN1. As such, a working angle θ1 of the main intake cam 172c is larger than a working angle θ2 of the sub intake cam 172d, and a lift amount LA1 of the main intake cam 172c is larger than a lift amount LA2 of the sub intake cam 172d. The cam nose CN1 corresponds to the range from the angle A12 to the angle A13 of Fig. 3, and the cam nose CN2 corresponds to the range from the angle A26 to the angle A27 of Fig. 9.

As shown in Figs. 10(a) and 10(b), the valve driver 17 includes intake rocker arms RA1a, RA1b in place of the intake rocker arm RA1 of Fig. 8. The intake rocker arm RA1a is provided to be swingable and abuttable against the main intake cam 172c, and the intake rocker arm RA1b is provided to be swingable and abuttable against the sub intake cam 172d. The intake rocker arm RA1b abuts against an upper end of the intake valve 15. Thus, the intake valve 15 is lifted by the swinging of the intake rocker arm RA1b.

The intake rocker arm RA1a is provided with a hole H1, and the intake rocker arm RA1b is provided with a hole H2. The holes H1, H2 extend in a common direction. A connecting pin 181 and a biasing member 182 are disposed in the hole H2.

The engine 10 includes a pin driver 180 that drives the connecting pin 181. The pin driver 180 moves the connecting pin 181 between a storage position in which a tip of the connecting pin 181 is stored in the hole H2 (the position of Fig. 10(a)) and an insertion position in which the tip of the connecting pin 181 is inserted in the hole H1 (the position of Fig. 10(b)). When the connecting pin 181 is in the storage position of Fig. 10(a), the intake rocker arms RA1a, RA1b are swung independently of each other. On the other hand, when the connecting pin 181 is in the insertion position of Fig. 10(b), the intake rocker arms RA1a, RA1b are integrally swung.

During the reverse rotation start-up operation of the engine unit EU, the connecting pin 181 is held in the storage position of Fig. 10(a). In this case, the intake rocker arm RA1a is swung depending on the cam profile of the main intake cam 172c, and the intake rocker arm RA1b is swung depending on the cam profile of the sub intake cam 172d. As such, the crank angle range in which the intake valve 15 is lifted depends on the cam profile of the sub intake cam 172d and does not depend on the cam profile of the main intake cam 172c. Thus, the intake valve 15 is lifted in the range from the angle A26 to the angle A27 of Fig. 9.

On the other hand, during the normal operation of the engine unit EU, the connecting pin 181 is held in the insertion position of Fig. 10(b). As described above, the working angle and the lift amount of the main intake cam 172c are larger than those of the sub intake cam 172d. In this case, the intake rocker arms RA1a, RA1b are integrally swung depending on the cam profile of the main intake cam 172c. As such, the crank angle range in which the intake valve 15 is lifted depends on the cam profile of the main intake cam 172c and does not depend on the cam profile of the sub intake cam 172d. Thus, the intake valve 15 is lifted in the range from the angle A12 to the angle A13 of Fig. 3.

In this way, the intake valve 15 can be lifted at a time suitable for each of the normal operation and the reverse rotation start-up operation. In this example, the crank angle range, in which the intake valve 15 is lifted can be switched only by the movement of the connecting pin 181. Thus, the operation of the valve driver 17 can be switched with the simple configuration.

### [C] Third Embodiment

Regarding an engine system and a straddled vehicle according to a third embodiment of the present invention, a difference of the third embodiment from the above-described first embodiment will be described below.

### (1) Configuration of Engine Unit

Fig. 12 is a schematic side view for explaining the configuration of an engine unit EU according to the third embodiment. The engine unit EU of Fig. 12 includes an engine 10A in place of the engine 10 of Fig. 2. The engine 10A is a two-cylinder four-cycle engine and includes a first cylinder CY1 and a second cylinder CY2. Each of the first and second cylinders CY1, CY2 is provided with a piston 11 and has a combustion chamber 31a formed therein. Each piston 11 is connected to a crankshaft 13 via a connecting rod 12.

In the engine 10A of Fig. 12, the piston 11 in the second cylinder CY2 is positioned at the exhaust top dead center when the piston 11 in the first cylinder CY1 is positioned at the compression top dead center, and the piston 11 in the second cylinder CY2 is positioned at the compression top dead center when the piston 11 in the first cylinder CY1 is positioned at the exhaust top dead center. Accordingly, combustion in the first cylinder CY1 and combustion in the second cylinder CY2 are carried out alternately at substantially the same time interval.

The intake valve 15, the exhaust valve 16, the injector 18, and the ignition device 19 of Fig. 2 are provided for each of the first and second cylinders CY1, CY2. The configuration of a peripheral portion of each of the first and second cylinders CY1, CY2 is similar to that of the peripheral portion of the cylinder CY of Fig. 2.

### (2) Normal Operation

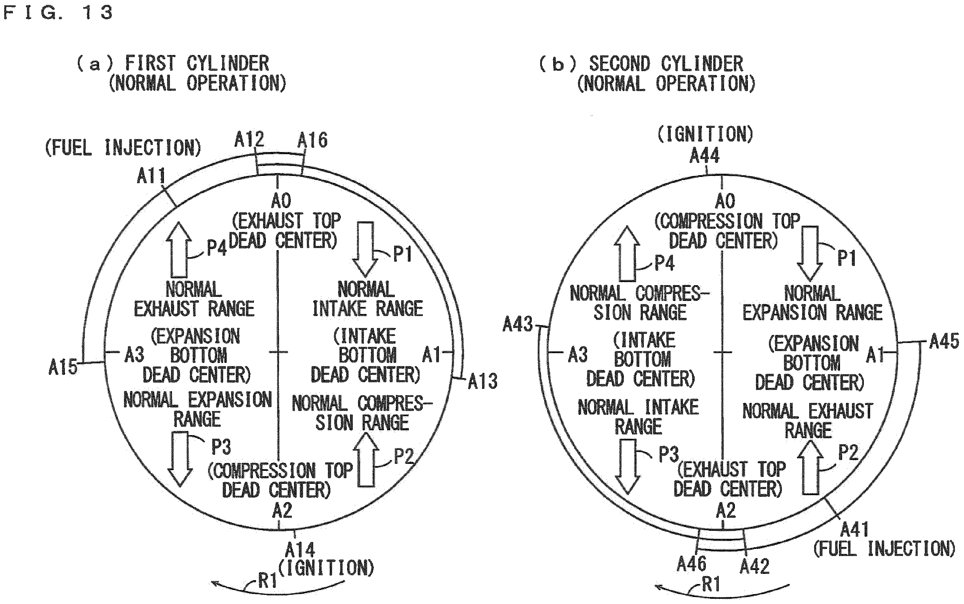

Fig. 13 is a diagram for explaining a normal operation of the engine unit EU of Fig. 12. In the example of Fig. 13, an operation in the first cylinder CY1 is the same as the operation in the cylinder CY of the above-described first embodiment.

Specifically, as shown in Fig. 13(a), the piston 11 (Fig. 12) is positioned at the exhaust top dead center when the crank angle is the angle A0, the piston 11 is positioned at the intake bottom dead center when the crank angle is the angle A1, the piston 11 is positioned at the compression top dead center when the crank angle is the angle A2, and the piston 11 is positioned at the expansion bottom dead center when the crank angle is the angle A3. Also, the piston 11 (Fig. 2) is lowered in the range from the angle A0 to the angle A1, raised in the range from the angle A1 to the angle A2, lowered in the range from the angle A2 to the angle A3, and raised in the range from the angle A3 to the angle A0. For the first cylinder CY1, the range from the angle A0 to the angle A1 is equivalent to the normal intake range, the range from the angle A1 to the angle A2 is equivalent to the normal compression range, the range from the angle A2 to the angle A3 is equivalent to the normal expansion range, and the range from the angle A3 to the angle A0 is equivalent to the normal exhaust range.

Fuel is injected by the injector 18 (Fig. 2) at the angle A11, and the intake port 21 (Fig. 2) is opened by the intake valve 15 (Fig. 2) in the range from the angle A12 to the angle A13, so that a fuel-air mixture is introduced into the combustion chamber 31a (Fig. 12). At the angle A14, the fuel-air mixture in the combustion chamber 31a is ignited by the ignition device 19 (Fig. 2). In the range from the angle A15 to the angle A16, the exhaust port 23 (Fig. 2) is opened by the exhaust valve 16 (Fig. 2), so that combusted gas is discharged from the combustion chamber 31a.

As shown in Fig. 13(b), a direction in which the piston 11 moves in the second cylinder CY2 is the same as a direction in which the piston 11 moves in the first cylinder CY1. In the second cylinder CY2, the piston 11 (Fig. 12) is positioned at the compression top dead center when the crank angle is the angle A0, the piston 11 is positioned at the expansion bottom dead center when the crank angle is the angle A1, the piston 11 is positioned at the exhaust top dead center when the crank angle is the angle A2, and the piston 11 is positioned at the intake bottom dead center when the crank angle is the angle A3. For the second cylinder CY2, the range from the angle A2 to the angle A3 is equivalent to the normal intake range, the range from the angle A3 to the angle A0 is equivalent to the normal compression range, the range from the angle A0 to the angle A1 is equivalent to the normal expansion range, and the range from the angle A1 to the angle A2 is equivalent to the normal exhaust range.

In the second cylinder CY2, the fuel is injected into the intake passage 22 (Fig. 2) by the injector 18 (Fig. 2) at an angle A41, and the intake port 21 (Fig. 2) is opened by the intake valve 15 (Fig. 2) in the range from an angle A42 to an angle A43, so that the fuel-air mixture is introduced into the combustion chamber 31a (Fig. 12). The fuel-air mixture in the combustion chamber 31a (Fig. 12) is ignited by the ignition device 19 (Fig. 2) at an angle A44. The exhaust port 23 (Fig. 2) is opened by the exhaust valve 16 (Fig. 2) in a range from an angle A45 to an angle A46, so that combusted gas is discharged from the combustion chamber 31a. The angles A41 to A46 of Fig. 13(b) differ by 360 degrees from the angles A11 to A16 of Fig. 13(a), respectively.

### (3) Reverse Rotation Start-up Operation

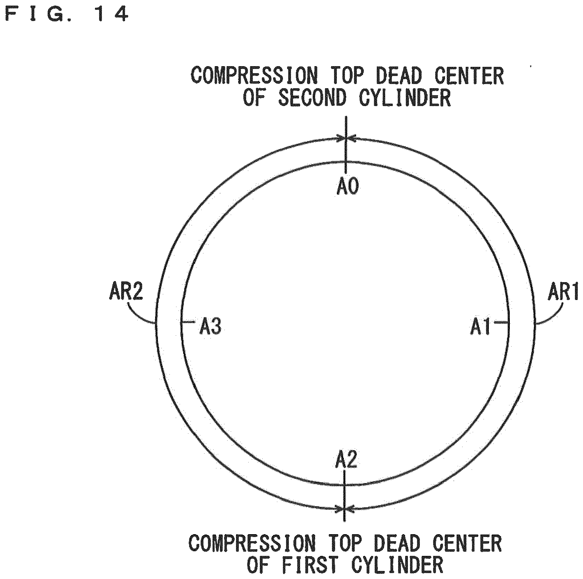

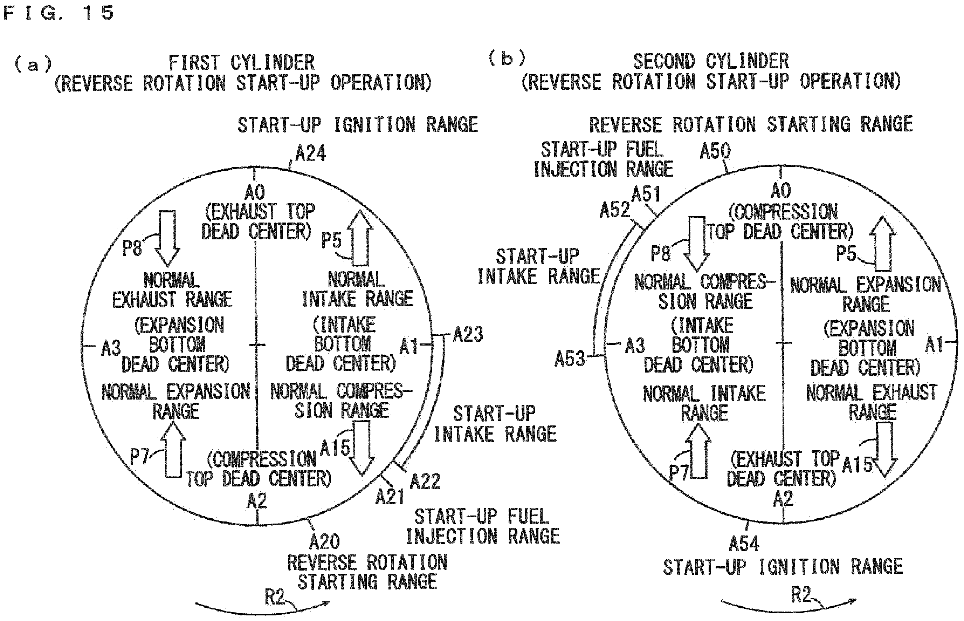

Figs. 14 and 15 are diagrams for explaining a reverse rotation start-up operation of the engine unit EU of Fig. 12. In this example, the fuel-air mixture is selectively combusted in one of the first and second cylinders CY1, CY2 during the reverse rotation start-up operation based on the crank angle of the stopped engine 10A.

As shown in Fig. 14, the angle A0 corresponds to the compression top dead center of the second cylinder CY2, and the angle A2 corresponds to the compression top dead center of the first cylinder CY1. As such, a large torque is required for the crank angle to pass through the angle A0 or to pass through the angle A2.

Thus, when the crank angle of the stopped engine 10A is within a range AR1 from the angle A0 to the angle A2 in the forward direction, the fuel-air mixture is combusted in the first cylinder CY1 during the reverse rotation start-up operation. Specifically, as shown in Fig. 15(a), similarly to the above-described first embodiment, after the crank angle is adjusted to the angle A20, the fuel is injected at the angle A21 while the crankshaft 13 is rotated in reverse, and the fuel-air mixture is introduced into the combustion chamber 31a in the range from the angle A22 to the angle A23, so that the fuel-air mixture in the combustion chamber 31a is ignited at the angle A24.

Thus, combustion can be generated in the first cylinder CY1 while the crank angle does not pass through the angles A2, A0, which correspond respectively to the compression top dead centers of the first cylinder and the second cylinder CY2. The crankshaft 13 is driven in the forward direction by energy of the combustion, whereby the crank angle can exceed the angles A0, A2.

On the other hand, when the crank angle of the stopped engine 10A is within a range AR2 from the angle A2 to the angle A0 in the forward direction, the fuel-air mixture is combusted in the second cylinder CY2 in the reverse rotation start-up operation. Specifically, as shown in Fig. 15(b), after the crank angle is adjusted to an angle A50, the fuel is injected at an angle A51 while the crankshaft 13 is rotated in reverse, and the fuel-air mixture is introduced into the combustion chamber 31a in a range from an angle A52 to an angle A53, so that the fuel-air mixture in the combustion chamber 31a is ignited at an angle A54.

The angle A50 is an example of the reverse rotation starting range and is within the normal compression range. The angle A51 is an example of the start-up fuel injection range and is within the normal compression range. The range from the angle A52 to the angle A53 is an example of the start-up intake range, and the angle A54 is an example of the start-up ignition range. The angles A50 to A54 of Fig. 15(b) differ by 360 degrees from the angles A20 to A24 of Fig. 15(a), respectively.

Thus, combustion can be generated in the second cylinder CY2 while the crank angle does not pass through the angles A2, A0, which correspond respectively to the compression top dead centers of the first cylinder CY1 and the second cylinder CY2. The crankshaft 13 is driven in the forward direction by energy of the combustion, whereby the crank angle can exceed the angles A0, A2.

In this way, similarly to the above-described first embodiment, the introduction, the compression and the combustion of the fuel-air mixture are carried out in one of the first and second cylinders CY1, CY2, whereby the start-up of the engine 10A can be carried out in a shorter time at lower energy.

### (4) Another Example of Reverse Rotation Start-up Operation

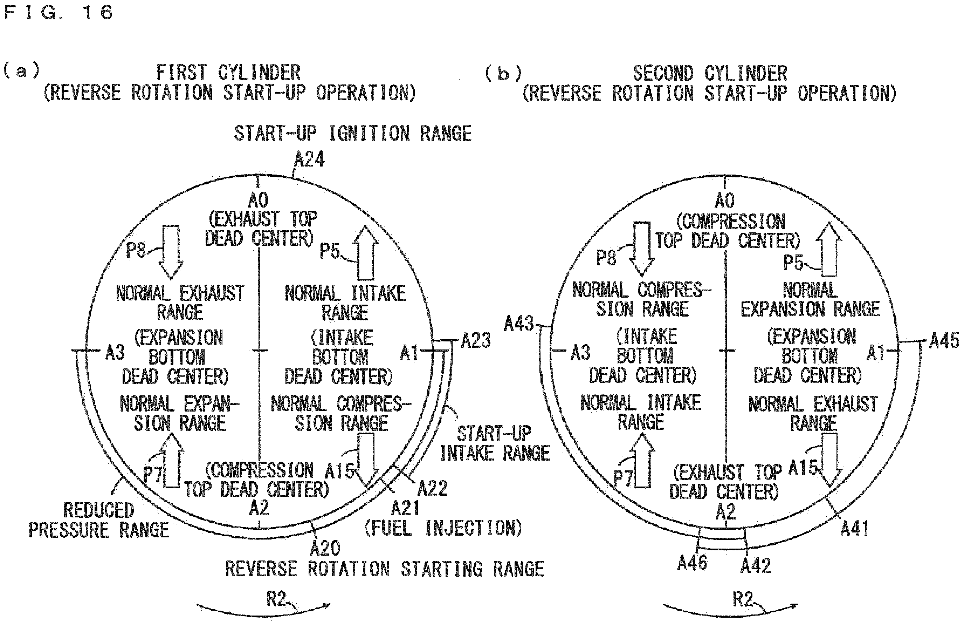

Fig. 16 is a diagram for explaining another example of the reverse rotation start-up operation of the engine unit EU of Fig. 12. A difference of the example of Fig. 16 from the example of Fig. 15 will now be described.

When the crank angle of the stopped engine 10A is within the range AR1 of Fig. 14, the reverse rotation start-up operation is performed such that the fuel-air mixture is combusted in the first cylinder CY1 after the crank angle is adjusted to the angle A20, similarly to the example of Fig. 15(a).

On the other hand, when the crank angle of the stopped engine 10A is within the range AR2 of Fig. 14, pressure in the first cylinder CY1 is lowered while the crankshaft 13 is rotated in reverse. As shown in Fig. 16(a), for example, the range from the angle A3 to the angle A1 in the reverse direction is set as a reduced pressure range. When the crank angle is in the reduced pressure range during the reverse rotation of the crankshaft 13, the exhaust port 23 (Fig. 2) of the first cylinder CY1 is opened by a pressure reducing mechanism, not shown. In this case, even if the crank angle approaches the angle A2, an increase in rotational resistance of the crankshaft 13 is reduced and, therefore, the crank angle can exceed the angle A2 without requiring large torque. Thus, the crank angle can be adjusted to the angle A20. After that, the reverse rotation start-up operation is performed such that the fuel-air mixture is combusted in the first cylinder CY1, similarly to the example of Fig. 15(a).

In this example, the fuel-air mixture is not combusted in the second cylinder CY2 in the reverse rotation start-up operation. As such, as shown in Fig. 16(b), the intake port 21 and the exhaust port 23 in the second cylinder CY2 are opened also during the reverse rotation start-up operation in the same crank angle range as that during the normal operation.

The reduced pressure range is not limited to the example of Fig. 16(a). For example, in the reverse direction, the range from the angle A3 to the angle A2 may be set as the reduced pressure range, or alternatively, part of the range from the angle A3 to the angle A2 may be set as the reduced pressure range. In this case, also an increase in rotational resistance of the crankshaft 13 due to an increase in pressure in the first cylinder CY1 is reduced.

In addition, the crank angle may be adjusted to the angle A20 by reducing the pressure in the second cylinder CY2 while the crankshaft 13 is rotated in the forward direction, instead of reducing the pressure in the first cylinder CY1 while the crankshaft 13 is rotated in reverse. For example, the range from the angle A3 to the angle A0 in the forward direction is set as the reduced pressure range. In this case, even if the crank angle is within the range AR2 of Fig. 14, the pressure in the second cylinder CY2 is reduced in the reduced pressure range while the crankshaft 13 is rotated forward, so that the crank angle can exceed the angle A0 corresponding to the compression top dead center of the second cylinder CY2. Thus, the crank angle can be adjusted to the angle A20. Accordingly, the reverse rotation start-up operation can be performed similarly to the example of Fig. 15(a).

### [D] Other Embodiments

While the above-described embodiments are the examples in which the present invention is applied to the engine system and the motorcycle including the single-cylinder engine or the two-cylinder engine, the present invention is not limited to this. The present invention may be applied to an engine system and a motorcycle including a multi-cylinder engine with three or more cylinders.

While the above-described embodiments are the examples in which the present invention is applied to the motorcycle, the present invention is not limited to this. The present invention may be applied to another straddled vehicle such as a motor tricycle, an ATV (All-Terrain Vehicle) or the like.

### [E] Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiments, the engine system 200 is an example of an engine system, the engines 10, 10A are examples of an engine, the rotary electrical machine 14 is an example of a rotation driver, the crankshaft 13 is an example of a crankshaft, the ECU 6 is an example of a controller, the valve driver 17 is an example of a valve driver, the intake cam driver 175 or the pin driver 180 is an example of a switch, the main intake cams 172a, 172c are examples of a normal intake cam, the sub intake cams 172b, 172d are examples of a start-up intake cam, the intake rocker arm RA1a is an example of a first intake rocker arm, and the intake rocker arm RA1b is an example of a second intake rocker arm. The motorcycle 100 is an example of a straddled vehicle, the rear wheel 7 is an example of a drive wheel, and the vehicle body 1 is an example of a main body.

As each of the various elements is recited in the claims, various other elements having configurations or functions described in the claims can be also used.

### [Industrial Applicability]

The present invention is applicable to various types of engine systems and straddled vehicles.

## Claims

1. An engine system comprising:
an engine;
a rotation driver that rotates a crankshaft of the engine in a forward direction and in a reverse direction; and
a controller that controls the engine and the rotation driver,
wherein a range of a crank angle corresponding to an intake stroke during a normal operation is defined as a normal intake range, and the range of the crank angle corresponding to a compression stroke during the normal operation is defined as a normal compression range,
the normal compression range includes at least part of a start-up intake range, and the normal intake range includes a start-up ignition range, and
wherein the controller controls the rotation driver during start-up of the engine to perform a reverse rotation operation for rotating the crankshaft in the reverse direction such that the crank angle passes through the start-up intake range and reaches the start-up ignition range, and
the controller controls the engine during the reverse rotation operation of the rotation driver such that a fuel-air mixture is introduced into a combustion chamber through an intake port when the crank angle is in the start-up intake range, the fuel-air mixture in the combustion chamber is compressed when the crank angle is in the normal intake range, and the fuel-air mixture in the combustion chamber is ignited when the crank angle is in the start-up ignition range.

2. The engine system according to claim 1, wherein the normal compression range includes a reverse rotation starting range that is positioned at a further advanced angle than the start-up intake range in the reverse direction, and
the controller controls the rotation driver such that the crank angle is adjusted to be in the reverse rotation starting range before the reverse rotation operation.

3. The engine system according to claim 1 or 2, wherein the normal compression range includes a start-up fuel injection range that is positioned at a further advanced angle than the start-up intake range in the reverse direction, and
the controller controls the engine during the reverse rotation operation of the rotation driver such that fuel is injected into an intake passage when the crank angle is in the start-up fuel injection range.

4. The engine system according to any one of claims 1 to 3, wherein the engine includes
a valve driver that drives an intake valve and an exhaust valve, and
a switch that switches an operation of the valve driver,
wherein the valve driver includes
a normal intake cam that lifts the intake valve in the normal intake range, and
a start-up intake cam that lifts the intake valve in the start-up intake range and does not lift the intake valve in part of the normal intake range excluding the start-up intake range, and
wherein the switch switches the operation of the valve driver such that the normal intake cam drives the intake valve during the normal operation, and the start-up intake cam drives the intake valve during the reverse rotation operation of the rotation driver.

5. The engine system according to claim 4, wherein the switch switches the operation of the valve driver between a state where the normal intake cam drives the intake valve and a state where the start-up intake cam drives the intake valve by moving the normal intake cam and the start-up intake cam.

6. The engine system according to claim 4, wherein the normal intake cam is provided to lift the intake valve in a normal lift range that includes the normal intake range and the start-up intake range,
the valve driver further includes
a first intake rocker arm that abuts against the normal intake cam, and
a second intake rocker arm that is abuttable against the start-up intake cam and drives the intake valve, and
the switch switches the operation of the valve driver between a state where the first and second intake rocker arms swing independently of each other and a state where the first and second intake rocker arms swing integrally.

7. The engine system according to any one of claims 1 to 6, wherein the engine discharges combusted gas from the combustion chamber through an exhaust port after the reverse rotation operation of the rotation driver and before the crank angle reaches an angle corresponding to a first compression top dead center.

8. The engine system according to claim 7, wherein the engine does not open the intake port after the reverse rotation operation of the rotation driver and before the crank angle reaches the angle corresponding to the first compression top dead center.

9. The engine system according to claim 7, wherein the engine opens the intake port in the start-up intake range and opens the exhaust port in part of the normal compression range during the reverse rotation operation of the rotation driver, and also after the reverse rotation operation of the rotation driver and before the crank angle reaches the angle corresponding to the first compression top dead center.

10. A straddled vehicle comprising:
a main body having a drive wheel; and
the engine system according to any one of claims 1 to 9 that generates motive power for rotating the drive wheel.
